Europäisches Patentamt

(19) European Patent Office

Office européen des brevets

(11) Publication number: **0 193 068**
**A1**

# (12) EUROPEAN PATENT APPLICATION

(21) Application number: 86101998.2

(22) Date of filing: 17.02.86

(51) Int. Cl.⁴: **C 08 G 59/18**
**C 08 G 59/50, C 08 G 59/56**
**C 08 J 5/24**
**//C08L63/00**

(30) Priority: 18.02.85 JP 29971/85
21.02.85 JP 31439/85

(43) Date of publication of application:
03.09.86 Bulletin 86/36

(84) Designated Contracting States:
CH DE FR GB IT LI NL

(71) Applicant: Asahi Kasei Kogyo Kabushiki Kaisha
2-6, Dojimahama 1-chome Kita-ku
Osaka-shi Osaka 530(JP)

(72) Inventor: Ishimura, Hidekazu
85-173, Hoshiyama Fujimiya-shi
Shizuoka-ken(JP)

(72) Inventor: Ohtsuka, Masahiko
RN A-14 Endou-Apartment 68, Aoshima-cho
Fuji-shi Shizuoka-ken(JP)

(72) Inventor: Yamamura, Hideo
RN 115 Aoshima-Apartment 208, Aoshima-cho
Fuji-shi Shizuoka-ken(JP)

(74) Representative: Strehl, Schübel-Hopf, Groening, Schulz
Widenmayerstrasse 17 Postfach 22 03 45
D-8000 München 22(DE)

(54) One liquid type epoxy resin composition.

(57) The present invention provides a one-liquid type epoxy resin composition which is useful especially as a coating material and adhesive for a wide range of applications. The resin composition comprises

(1) an epoxy resin (A) containing at least an average of two epoxy groups per molecular unit; and

(2) a curing agent (B) consisting essentially of a powdery amine compound (C) having a softening point of 50 to 150°C, the particles of said powdery amine compound being coated with at least one of the following layers:

(i) a layer formed by adhesion to the surface of said particles of at least one compound selected from the group consisting of an isocyanate (D), a carboxylic acid (E), a carboxylic acid anhydride (F), an acid halogenated compound (G) and an epoxy compound (H); and

(ii) a layer formed by covalent bonding of the powdery amine compound (C) with at least one compound selected from the group consisting of an isocyanate (D), a carboxylic acid (E), a carboxylic acid anhydride (F), an acid halogenated compound (G) and an epoxy compound (H);

the softening temperature of said curing agent (B) being 5 to 50°C higher than the softening temperature of said powdery amine compound (C).

# ONE LIQUID TYPE EPOXY RESIN COMPOSITION

## BACKGROUND OF THE INVENTION

This invention relates to a one-liquid type epoxy resin composition. More particularly, it relates to a one liquid type epoxy resin composition which can be cured at a lower temperature and also has excellent storage stability.

Epoxy resins have been used in a variety of fields such as adhesives, paints, laminating and casting, on account of the excellent properties inherent in the cured products thereof. Epoxy resin compositions which nowadays are generally used are so-called two-liquid type compositions comprising an epoxy resin and a curing agent which are mixed just before use. Although the two liquid type epoxy resin compositions can be cured at room temperature, their preservation and handling are troublesome because the epoxy resin and the curing agent must be preserved separately and both must be weighed in desired amounts and mixed before use. Moreover, since the time during which they remain in a usable state is limited, they cannot be mixed in advance in a large amount and, when they are used in a large amount, mixing must be repeated frequently, thereby inevitably causing a loss of efficiency.

For the purpose of eliminating the disadvantages associated with two-liquid type epoxy resin compositions, there have been proposed several kinds of one-liquid type epoxy resin compositions. Examples are compositions incorporating with an epoxy resin a latent curing agent such as dicyandiamide, a $BF_3$-amine complex and an amine salt; compositions obtained by mixing an epoxy resin and an amine-type curing agent and immediately freezing the mixture to stop the reaction between the resin and the curing agent; compositions in which an amine-type curing agent is formed into microcapsules dispersed in an epoxy resin (e.g. Japanese Unexamined Patent Publication No. 83023/1983 and Japanese Patent Publication No. 43176/1986); compositions in which a curing agent is adsorbed in a molecular sieve to prevent the curing agent from coming into contact with the epoxy resin; etc. However, these compositions which use freezing, microencapsulation, molecular sieves, etc. may have extremely high production costs in the present technical state of the art. Furthermore, they can not be said to give satisfactory performances.

For instance, in Japanese Patent Publication No. 17654/1968, a curing agent is formed into microcapsules to provide a one-liquid type composition. However, when an epoxy resin is cured with this curing agent, the microcapsules must be destroyed by the application of mechanical force. Accordingly, such a composition is not suitable under the presently required curing conditions of 100 to 150 °C in 10 to 60 minutes without the application of pressure. In Japanese Unexamined Patent Publication No. 83023/1983, a functional group present on the surface of the particles of a curing agent (which functional group reacts with an epoxy resin) is blocked with methyl iodide, acetic acid, etc. However, such a mere blockage of the surface functional group cannot achieve the performance, in particular with respect to storage stability, of a one-liquid type composition. Also in the examples where a latent curing agent is used, those having excellent storage stability must be cured at high temperature, whereas those capable of being cured at relatively lower temperature are inferior in storage stability. Thus, in practice, the compositions

- 3 -                                    0193068

containing a latent curing agent are not satisfactory.

Even though they are not entirely satisfactory, a variety
of one-liquid type epoxy resin type compositions
containing a latent curing agent are used in view of the
easy handling of the curing agent and the inexpensiveness
of the products.  However, as mentioned above, the
compositions which have excellent storage stability may
have inferior curability, and various improvements have
been attempted.  Dicyandiamide, which is a well-known
latent curing agent, requires a curing temperature of 170
$^{\circ}$C or more when it is cured by itself.  Its storage
stability is 6 months or more at room temperature.  In
order to lower the curing temperature of dicyandiamide,
it has been proposed to add an accelerator such as a
tertiary amine, an imidazole, or a dimethylurea compound.
The addition of the accelerator lowers the curing
temperature, but decreases the storage stability, thus
not making the most of the latent properties of the
dicyandiamide.  Accordingly, there has been a strong need
for a one-liquid type epoxy resin composition containing
an accelerator capable of lowering the curing temperature
without impairing characteristics such as excellent
storage stability possessed by a latent curing agent like
dicyandiamide.

## SUMMARY OF THE INVENTION

The present inventors have made intensive studies to
develop an epoxy resin composition which can overcome the
disadvantages possessed by conventional one-liquid type
epoxy resin compositions, and yet can retain the
advantages inherent in the one-liquid type composition.
This invention has been thus accomplished.

Namely, this invention concerns a one-liquid type epoxy resin composition which comprises;

(1)  an epoxy resin (A); and

(2)  a curing agent (B) consisting essentially of a powdery amine compound (C) having a softening temperature of 50 to 150 °C, the particles of said powdery amine compound being coated with at least one of the following layers:

(i) a layer formed by adhesion to the surface of said articles of at least one compound selected from the group consisting of an isocyanate (D), a carboxylic acid (E), a carboxylic acid anhydride (F), an acid halogenated compound (G) and an epoxy compound (H); and

(ii) a layer formed by covalent bonding of the powdery amine compound (C) with at least one compound selected from the group consisting of an isocyanate (D), a carboxylic acid (E), a carboxylic acid anhydride (F), an acid halogenated compound (G) and an epoxy compound (H);

the softening temperature of said curing agent (B) being 5 to 50 °C higher than the softening temperature of said powdery amine compound (C).

This invention also concerns a one-liquid type epoxy resin composition which comprises;

(1)  an epoxy resin (A);

(2)  a curing agent (B) comprising a powdery amine compound (C) having a softening temperature of 50 to 150 °C, the particles of said powdery amine compound being coated with at least one of the following layers:

(i)  a layer formed by adhesion to the surface of said particles of at least one compound selected from the group consisting of an isocyanate (D), a carboxylic acid (E), a carboxylic acid anhydride (F), an acid halogenated compound (G) and an epoxy compound (H); and

(ii) a layer formed by covalent bonding of the powdery amine compound (C) with at least one compound selected from the group consisting of an isocyanate (D), a carboxylic acid (E), a carboxylic acid anhydride (F), an acid halogenated compound (G) and an epoxy compound (H);

the softening temperature of said curing agent (B) being 5 to 50 °C higher than the softening temperature of said powdery amine compound (C); and

(3) at least one compound selected from the group consisting of a guanidine (O), an aromatic amine (P), a carboxylic acid anhydride (Q) and a hydrazide (R).

The one-liquid type epoxy resin composition according to this invention has excellent storage stability and curability as compared with conventional one-liquid type epoxy resin compositions. Further, variances in products due to production conditions can be significantly reduced with the one-liquid type epoxy resin composition of this intention.

### DESCRIPTION OF THE PREFERRED EMBODIMENTS

The one-liquid type epoxy resin composition of this invention will be described below in greater detail.

The epoxy resin (A) used in this invention is not particularly limited as long as it has two or more epoxy groups in one molecule on an average. For example, the epoxy resin may be prepared from polyhydric phenols such

- 6 -

0193068

as bisphenol A, bisphenol F, catechol and resorcinol; polyglycidyl ethers obtained by reacting polyhydric alcohols such as glycerine and polyethylene glycol with epichlorohydrin; esters of glycidyl ether obtained by reacting hydroxycarboxylic acids such as p-oxybenzoic acid and $\beta$-oxynaphthoic acid with epichlorohydrin; polyglycidyl esters obtained by reacting polycarboxylic acids such as phthalic acid and terephthalic acid with epichlorohydrin; glycidyl amine compounds obtained by reacting 4,4-diaminodiphenyl- methane, m-aminophenol, etc. with epichlorohydrin; epoxydized novolac resins; epoxydized cresol novolac resins; epoxydized polyolefins, etc.

The epoxy resin (A) is not limited to the above examples. A preferable epoxy resin contains a glycidyl ether of bisphenol A. The hydrolyzable chlorine contained in the epoxy resin greatly affects the storage stability and the curability of the product. Accordingly, the content of hydrolyzable chlorine preferably should not exceed 300 ppm, and more preferably, should not exceed 50 ppm.

The powdery amine compound (C) used in this invention and having a softening temperature of 50 to 150 $^{O}C$ may be obtained by grinding an amine compound (C) having a softening temperature of 50 to 150 $^{O}C$. If the softening temperature is less than 50 $^{O}C$, the powdery amine compound (C) tends to coagulate during storage, making handling of the product difficult. If it is more than 150 $^{O}C$, the goal of curing in a shorter time is not met. In order to obtain a product which cures very easily and has excellent storage stability, the preferable softening temperature is the range of from 60 to 120 $^{O}C$. In this invention, the softening temperature refers to the temperature at which the substance starts to melt, and is measured according to JIS-K0064 "Method of Measuring

- 7 -

Melting Points of Chemical Products".

The powdery amine compound (C) used in this invention and having a softening temperature of 50 to 150 °C may be a single compound.  Examples are aliphatic amines such as decamethylenediamine; aromatic amines such as o-phenylenediamine, triamino-benzine, o-aminobenzylamine, 2,4-diaminotoluene, triaminotoluene, benzidine, 4,4-diaminodiphenylmethane, p,p-bisaminomethybiphenyl, p,p-bis-aminomethyldiphenylmethane, methaphenylenediamine and paraphenylenediamine; imidazole compounds such as imidazole, 2-methylimidazole, 2-undecylimidazole, 4-methylimidazole, 2-phenylimidazole, 2-heptadecylimidazole, 1-cyanoethyl-2-methylimidazole and 1-cyanoethyl-2-undecyl-imidazole-trimellitate; and imidazoline compounds such as 2-methylimidazoline, 2-phenylimidazoline, 2-undecylimidazoline and 2-heptadecylimidazoline.

The powdery amine compound (C) may also be the reaction product of an epoxy resin-curing agent (X) with a compound (Y).

The epoxy resin-curing agent (X) may be an aliphatic amino compound such as ethylenediamine, diethylenetriamine, triethylenetetramine, tetraethylenepentamine and diethylaminopropylamine; an aromatic amine such as m-phenylenediamine, diaminodiphenylmethane, diaminodiphenylsulfone and bisaminomethyldiphenylmethane; a hydrazide such as adipic dihydrazide, succinic dihydrazide, sebacic dihydrazide, and terephthalic dihydrazide; dicyandiamide; an imidazole compound such as 2-methylimidazole, 2-ethylimidazole, 2-isopropylimidazole, 2-dodecylimidazole, 2-undecylimidazole, 2-phenylimidazole and 2-ethyl-4-methylimidazole; a carbonate of an imidazole compound; etc.

The compound (Y) may be a carboxylic acid such as succinic acid, adipic acid, sebacic acid, phthalic acid, terephthalic acid and dimeric acid; a sulfonic acid such as ethanesulfonic acid and p-toluenesulfonic acid; an isocyanate such as toluylene diisocyanate, 4,4-diphenylmethane diisocyanate and hexamethylene diisocyanate; a p-hydroxystyrene resin; a phenol resin; an epoxy resin; etc. The reaction of the epoxy resin-curing agent (X) with the compound (Y) may be carried out by commonly known synthesis methods. The softening temperature of the powdery amine compound (C) may be controlled by controlling the amounts of epoxy resin-curing agent (X) and of compound (Y).

The powdery amine compound (C) may be selected from those amines having a softening temperature of 50 to 150 $^{O}$C, but it is preferably a compound (I) having two or more amino group active hydrogens per molecule of the powdery amine compound (C), or having one or more tertiary amino groups per molecule of the powdery amine compound (C). The compound having the amino group active hydrogens may be, for example, the above-mentioned aromatic amine compounds having a softening temperature of 50 to 150 $^{O}$C; adducts of aliphatic amines with an epoxy resin such as an adduct of ethylenediamine with an epoxy resin, an adduct of diethylenetriamine with an epoxy resin, an adduct of triethylenetetramine with an epoxy resin, an adduct of hexamethylenediamine with an epoxy resin and an adduct of diethylaminopropylamine with an epoxy resin; condensates of aliphatic amines with dicarboxylic acids; polyureas such as an adduct of an aliphatic amine with toluylene diisocyanate and an adduct of an aliphatic amine with hexamethylenediisocyanate; and denatured products of succinic hydrazide, adipic hydrazide, dicyandiamide, etc. The compound having one or more tertiary amino groups may be, for example, the

- 9 -

0193068

above-mentioned imidazole compounds having a softening temperature of 50 to 150 ºC; adducts of imidazole compounds with epoxy resins; adducts of carboxylates of imidazole compounds with epoxy resins; and adducts of compounds having secondary amino groups with an epoxy resins such as an adduct of dimethylamine with an epoxy resin, an adduct of dipropylamine with an epoxy resin, an adduct of di(hydroxymethyl)amine with an epoxy resin and an adduct of di(hydroxyethyl)amine with an epoxy resin. Compound (I) may be produced by commonly known synthesis methods. The softening temperature of compound (I) may be controlled by controlling the amounts of the reactants.

Of these powdery amine compounds (C), particularly preferable for obtaining a product having excellent curability and storage stability is an imidazole derivative (J) having one or more hydroxyl groups per molecule of the powdery amine compound (C). Such a compound may be an adduct (N) of an imidazole compound (L) or a carboxylic acid salt (M) of an imidazole compound with a compound (K) having one or more epoxy groups per molecule. The imidazole compound (L) may be imidazole, 2-methylimidazole, 2-ethylimidazole, 2-ethyl-4-methylimidazole, 2-isopropylimidazole, 2-undecylimidazole, 2-phenylimidazole, etc. and their carboxylic acid salts. The carboxylic acid may be acetic acid, lactic acid, salicylic acid, benzoic acid, adipic acid, phthalic acid, citric acid, tartaric acid, maleic acid, trimellitic acid, etc. Also, the compound (K) having one or more epoxy groups per molecule may be a monoepoxy compound such as butylglycidyl ether, hexylglycidyl ether, phenylglycidyl ether, p-xylylglycidyl ether, glycidyl acetate, glycidyl butyrate, glycidyl hexoate, glycidyl benzoate, etc., or the compound (K) may be any of the above-mentioned respective components for the epoxy resin (A). For obtaining excellent curability and storage stability, preferable is a compound or a mixture of compounds selected from 2-methylimidazole and 2-ethyl-4-methylimidazole as the imidazole compound (L), and most preferable as the epoxy compound (K) is an epoxy resin obtained by reacting bisphenol A with epichlorohydrin.

The adduct (N) of the imidazole compound (L) with the epoxy compound (K) may be produced by commonly known methods. The softening temperature of the adduct (N) may be controlled by controlling the amounts of the imidazole compound (L) and the epoxy compound (K).

The mean particle size of the powdery amine compound (C) used in this invention is not particularly limited. Sometimes, however, the curing rate may be reduced and the properties of the cured product impaired when the mean particle size is too large. Preferably, the mean particle size should not exceed 50 μ. A mean particle size exceeding this value may result in lowering of chemical resistance and mechanical strength in the cured product. Most preferably, the mean particle size should not exceed 5 μ.

The mean particle size refers to the Stokers' diameter measured by a centrifugal sedimentation method or a sedimentation method shown in Table 4.4 in "Coagulation Engineering" published in 1982 by the Japan Powder Industry Technolgy Association. The mean particle size refers also to a mode diameter.

The shape of the particles of the powdery amine compound (C) used in this invention is not particularly limited However, for readiness in curing, the particles should have a non-spherical shape. Non-spherical particles may be obtained by mechanical grinding. For example, a hammer mill grinding machine, a jet grinding machine, a ball mill grinding machine, etc. may be used.

"Non-spherical shape" in this invention means a shape having more than one values in the spherical degree shown in Table 13 - 3 in the "Handbook of Chemical Industries", Chemical Industry Association, Revised 4th Edition, January 20, 1984, 4th Print.

The isocyanate compound (D) used in this invention may be phenyl isocyanate, 4,4-diphenylmethane diisocyanate, tolylene diisocyanate, hexamethylene diisocyanate, and xylylene diisocyanate, etc.

The carboxylic acid compound (E) may be an formic acid, acetic acid, propionic acid, butyric acid, adipic acid, succinic acid, phthalic acid, terephthalic acid, etc.

The acid halogenated compound (G) may be an acid halide such as acetyl chloride, a chloride of propionic acid, a chloride of succinic acid, a chloride of adipic acid, etc.

The carboxylic acid anhydride compound (F) may be pyromellitic anhydride, benzophenone tetracarboxylic anhydride, acetic anhydride, propionic anhydride, phthalic anhydride, etc.

The epoxy compound (H) may be the above-mentioned compound (K) having one or more of epoxy groups per molecule, or the above-mentioned amine compound (C), etc.

The preferable compound for coating the particles of epoxy resin (A) is an isocyanate (D). Particularly preferable is a compound or a mixture of compounds selected from toluylene diisocyanate and 4,4-diphenylmethane diisocyanate, whereby a product having very excellent storage stability and curability can be obtained.

In this invention, the method of coating the powdery amine compound (C) with the layer formed by adhesion and/or by covalent bonding may be, for example, a method in which the powdery amine compound (C) is homogeneously dispersed (preferably with stirring) in a solvent which does not dissolve it, followed by addition of the isocyanate (D), etc., or a method in which the powdery amine compound (C) is fluidized in a stream, followed by spraying of the isocyanate (D), etc.

In this invention, it is very important that the softening temperature of the curing agent (B) is 5 to 50 $^{o}$C higher than the softening temperature of the powdery amine compound (C), in order for good storage stability and curability to be obtained. If the softening temperature of the curing agent (B) is less than 5 $^{o}$C higher than the softening temperature of the powdery amine compound (C), no improvement in storage stability is achieved, thus making the product unsuitable for use in the summer, although there would be no remarkable difference between curability of the curing agent (B) and the curability of the powdery amine compound (C). If the difference in softening points between the curing agent (B) and the powdery amine compound (C) exceeds 50 $^{o}$C, the curability of the curing agent (B) becomes extremely poor as compared with that of the powdery amine compound (C), although the storage stability of the curing agent (B) becomes very good. The difference in the softening temperatures may be controlled by selecting the kind of the powdery amine compound (C) or adjusting the kind or the amount of the powdery amine compound (C), the isocyanate (D), the carboxylic acid (E), the carboxylic acid anhydride (F), the acid halogenated compound (G) and the epoxy compound (H). Particularly preferably, the difference in softening temperatures should be 10 to 40 °C for best curability and storage stability.

The average thickness of the coating layer formed by adhesion or covalent bonding to the surface of the particles of amine compound (C) is chosen from the viewpoint of the curability and storage stability, and is preferably in the range of 100 to 10,000 Å. If it is less than 100 Å, the storage stability will not be improved, and if it is more than 10,000 Å, the curability will become extremely inferior as compared with that of the powdery amine compound (C). The thickness of layer herein mentioned may be determined by observing a sliced curing agent (B) by use of a transmission type electron microscope. Particularly preferably, the average thickness should be in the range of 200 to 1,000 Å for best curability and storage stability.

In this invention, the difference in softening temperature between the powdery amine compound (C) and the curing agent (B) is due to the apparent rise in softening temperature caused by formation of the coating layer by adhesion or covalent bonding to the powdery amine compound (C).

In this invention, it is not possible to distinguish the coating layer formed by adhesion from the coating layer formed by covalent bonding to the surface of the powdery amine compound (C).

The guanidine compound (O) used in this invention may be, for example, dicyandiamide, methyl guanidine, ethyl guanidine, propyl guanidine, butyl guanidine, dimethyl guanidine, trimethyl guanidine, phenyl guanidine,
diphenyl guanidine, toluyl guanidine, etc.  The aromatic
amine (P) may be, for example, diaminodiphenylmethane,
diaminodiphenylsulfone, m-phenylenediamine,
p-phenylenediamine, diaminotoluene, diaminoxylene,
diaminodiphenylamine, diaminobiphenyl,
bis(3-chloro-4-aminophenyl)methane, diaminobenzoic acid,
etc.  The carboxylic acid anhydride (Q) may be, for
example, phthalic anhydride, trimellitic anhydride,
pyromellitic anhydride, hexahydrophthalic anhydride,
tetrahydrophthalic anhydride, 3-chlorphthalic anhydride,
4-chlorophthalic anhydride, benzophenonetetracarboxylic
anhydride, succinic anhydride, methylsuccinic anhydride,
dimethylsuccinic anhydride, dichlorosuccinic anhydride,
nadic methyl anhydride, succinic dodecyl anhydride,
chlorendic anhydride, maleic anhydride, etc.  The
hydrazide (R) may be, for example, succinic hydrazide,
adipic hydrazide, glutaric hydrazide, sebacic hydrazide,
phthalic hydrazide, isophthalic hydrazide, terephthalic
hydrazide, p-oxybenzoic hydrazide, salicylic hydrazide,
phenylaminopropionic hydrazide, maleic hydrazide, and the
like.

The one-liquid type epoxy resin composition according to
this invention is obtained by merely mixing the epoxy
resin (A) and the curing agent (B) homogeneously.  The
mixing ratio is selected in view of both the curability
and the properties of the cured product, and is
preferably 0.1 part to 50 parts by weight of the curing
agent (B) to 100 parts by weight of the epoxy resin (A).
If the amount of curing agent (B) is less than 0.1 part
by weight, a very long period of time is required to
obtain sufficient curing, thus making the a product
unsuitable for practical use.  Also, if the amount of
curing agent (B) exceeds 50 parts by weight, the
viscosity of the mixture becomes high, thus increasing heat generation during the course of curing, thereby making it too difficult to control the curing to obtain a cured product.

The one-liquid type epoxy resin composition according to this invention can also be obtained by merely mixing homogeneously the epoxy resin (A), the curing agent (B), and component (3) selected from the group consisting of a guanidine, an aromatic amine, a carboxylic acid anhydride and a hydrazide. The mixing ratio is selected in view of the curability and the properties of the cured product, and is preferably 5 to 80 parts by weight of component (3) and 0.1 part to 20 parts by weight of the curing agent (B) to 100 parts by weight of the epoxy resin (A). If the amount of component (3) and the amount of the curing agent (B) are less than 5 parts by weight and 0.1 part by weight, respectively, a very long period of time is required to obtain sufficient curing, thus making the product unsuitable for practical use. Also, if the amount of component (3) and the amount of the curing agent (B) exceed 80 parts by weight and 20 parts by weight, respectively, the viscosity of a mixture becomes high, making the composition difficult to handle.

The one-liquid type epoxy resin composition according to this invention may be used optionally in combination with other curing agents. They may be, for example, phenol resins, melamine resins, urea resins, etc.

The one-liquid type epoxy resin composition according to this invention may be mixed optionally with an extending agent, a reinforcing agent, a filler, a pigment, etc. They may be, for example, coal tar, glass fiber, asbestos fiber, boron fiber, carbon fiber, cellulose, polyethylene powder, polypropylene powder, quartz powder, mineral silicate, mica, asbestos powder, slate powder, kaolin, aluminum oxide trihydrate, aluminum hydroxide, chalk powder, gypsum, calcium carbonate, antimony trioxide, pentone, silica, aerosol, lithophone, baryte titanium dioxide, carbon black, graphite, iron oxide, gold, aluminum powder, iron powder, etc. These optional components may be selected according to the end-use of the composition.

The one-liquid type epoxy resin omposition of this invention may be mixed optionally with an organic solvent, a reactive diluent, a non-reactive diluent, a denatured epoxy resin , etc. The organic solvent may be, for example, toluene, xylene, methyl ethyl ketone, methyl isobutyl ketone, ethyl acetate, butyl acetate, etc. The reactive diluent may be, for example, butyl glycidyl ether, N.N-diglycidyl-o-toluidine, phenyl glycidyl ether, styrene oxide, ethylene glycol diglycidyl ether, propylene glycol diglycidyl ether, 1,6-hexanediol diglycidyl ether, etc. The non-reactive diluent may be, for example, dioctyl phthalate, dibutyl phthalate, dioctyl adipate, petroleum solvents, etc. The modified epoxy resin may be, for example, a urethane modified epoxy resin, a rubber modified epoxy resin, an alkyd modified epoxy resin, etc.

The one-liquid type epoxy resin composition of this invention, has excellent storage stability at room temperature, has remarkably improved durability as compared with conventional one liquid type epoxy resin compositions, and can provide a cured product having good performance.

The one-liquid type epoxy resin composition according to this invention, giving an excellent cured product, can be utilized in a variety of fields. For instance, as adhesives, it is useful, in the field of automobiles, for fixing of headlights and gasoline tanks, joining of hemming flange portions of hoods and joining steel plates of bodies and roofs; in the electrical field, for fixing radio speaker magnets, impregnation and adhesion of motor coils, fixing of type heads and batteries, fixing of stabilizers for fluorescent lamps; and in the electronic field, as adhesives for die bonding, IC-chip encapsulating agent, adhesives for chip coating materials, chip mounting materials and printed boards; etc. As coating materials, it is useful for powder coating, or, in a special field, for solder resist ink, electroconductive coatings; etc. It is also useful for electric insulating materials, laminated structures, etc.

This invention will be described but is by no means limited in its scope by the following Examples. In the examples, "part" means by "part by weight".

Reference Example 1 & Example 1

Prepared was a reaction product of 2-methylimidazole with AER 330 (trademark; produced by Asahi Kasei Kogyo K. K.; a bisphenol type epoxy resin; epoxy equivalent: 185) (hereinafter "amine compound (a)"), and a reaction product of 2-methylimidazole with AER 661 (trademark; produced by Asahi Kasei Kogyo K. K.; a bisphenol A type epoxy resin; epoxy equivalent: 470) (hereinafter "amine compound (b)"). Amine compound (a), amine compound (b) and 2-ethyl-4-methylimidazole were mixed to obtain amine compound (C). Amine compound (C) was finely grounded into powder having a mean particle size of 4 μ. A jet grinding machine was used: (Hereinafter, a jet grinding machine was used unless otherwise stated.) It was confirmed by microscopic observation that the shape of the finely ground particles was not spherical. In 200 parts of hexane, 100 parts of amine compound (C) having a mean particle size of 4 µ was dispersed, to which 3.0 parts of tolylene diisocyanate were added while heating at 40 °C with stirring. After 2 hours of this treatment, hexane was removed under reduced pressure and a curing agent (C') was obtained. Properties of these are shown in Table 1.

8 parts of curing agent (C') were dispersed in 100 parts of AER X-2501 (trademark; produced by Asahi Kasei Kogyo K. K.; a bisphenol A type epoxy resin; epoxy equivalent: 190; hydrolyzable chlorine: 250 ppm) to give a one-liquid type resin composition according to this invention.

The curability and storage stability of this composition were measured. The results are shown in Table 2.

Test method:

Gelling time refers to the time by which 0.5 g of the composition placed on a steel plate heated to 120 °C no longer exhibited fiber-forming property. Storage stability is indicated by the period during which the increase in the viscosity of the composition at 25 °C is not more than 2-fold.

Table 1

| Reference Example 1 | |
|---|---|
| Amine compound (Softening temperature) | (C) 90 |
| Curing agent (Softening temperature) | (C') 109 |
| Difference in softening temperature | 19 |

Table 2

| Example 1 | |
|---|---|
| **Mixing:** | |
| AER X-2501 | 100 (parts) |
| Curing agent (C') | 8 (parts) |
| Gelling time (min.) | 3.0 |
| Storage stability (month) | 12 |

Curing agent (C') was observed by a transmission type microscope. It was found that the coating layer had an average thickness of 400 $\overset{\circ}{A}$.

The curing properties of the cured product employing the curing agent (C') (Curing conditions: 120 $^{\circ}$C x 30 min., mixed as in Table 2) are shown below:

Tg: 165 $^{\circ}$C

Tensile strength: 275 kg/cm$^2$

Tensile elongation: 3.4 %

Izod impact: 2.8 kg cm/cm

Water absorption: 0.2 % (25 $^{\circ}$C/7 days, weight in water

Shear adhesion strength (Fe-Fe): 150 kg/cm$^2$

$\varepsilon$ (Dielectric constant): 3.5 (1 MHz)

Tan $\delta$ (dielectric tangent): 0.008 (1 MHz)

Reference Examples 2 to 5 & Examples 2 to 5:

Amine compound (a), amine compound (b) and 2-ethyl-4-methylimidazole which were used in Example 1 were mixed to obtain amine compound (d), (e) (f) and (g). Amine

- 20 -

0193068

compounds (d), (e), (f) and (g) were ground into powders having mean particle sizes of 4 μ each. In 200 parts of hexane, 100 parts each of amine compounds (d), (e), (f) and (g) were dispersed, to which 3.0 parts each of tolylenediisocyanate were added while heating at 40 °C with stirring. After 2 hours of this treatment, hexane was removed under reduced pressure and curing agents (d'), (e'), (f') and (g') were obtained. Their properties of these are shown in Table 3.

8 parts of each of curing agents (d'), (e'), (f') and (g') were dispersed in 100 parts of AER X-2501.

The curability and storage stability of the resulting compositions were measured. The results are shown in Table 4.

Table 3 (Reference Examples)

| Reference Example | 2 | 3 | 4 | 5 |
|---|---|---|---|---|
| Amine compound | (d) | (e) | (f) | (g) |
| (Softening temperature) | 55 | 65 | 115 | 145 |
| Curing agent | (d') | (e') | (f') | (g') |
| (Softening temperature) | 76 | 85 | 135 | 154 |
| Difference in softening temperature | 21 | 20 | 20 | 19 |

Softening temperature... measured according to JIS 0064

Table 4 (Examples)

| Example | 2 | 3 | 4 | 5 |
|---|---|---|---|---|
| Mixing: | | | | |
|    AER X-2501 | 100 | 100 | 100 | 100 |
|    Curing agent | | | | |
|       (d') | 8 | | | |
|       (e') | | 8 | | |
|       (f') | | | 8 | |
|       (g') | | | | 8 |
| Gelling time (min.) | 2.5 | 3.0 | 3.0 | 4.0 |
| Storage stability (month) | 8 | 12 | 12 | 12 |

Examples 6 & 7

In 200 parts of hexane were dispersed 100 parts of amine compound (C) having a mean particle size of 4 μ, to which 0.5 part and 8 parts, respectively, of tolylene diisocyanate were added while heating at 40 °C with stirring to obtain the corresponding curing agents (C") and (C"'). The softening temperature of curing agent (C") was 97 °C and softening temperature of curing agent (C"') was 137 °C. The softening temperature of the curing agents was 7 °C and 47 °C, respectively above the softening temperature of amine compound (C).

The curability and storage stability of the compositions shown in Table 5 were measured. The results are also shown in Table 5.

Table 5

| Example | 6 | 7 |
|---|---|---|
| AER X-2501 | 100 | 100 |
| Curing agent (C") | 8 | |
| Curing agent (C"') | | 8 |
| Gelling time (min.) | 2.5 | 4.0 |
| Storage stability (month) | 6      12 | |

Curing agents (C") and (C"') were observed by a transmission type microscope. It was found that the coating layer had an average thickness of 120 $\overset{\circ}{A}$ and 6,000 $\overset{\circ}{A}$, respectively.

Example 8

Amine compound (f) used in Example 4 was finely ground and classified to obtain a ground material having a mean particle size of 40 μ.

100 parts of amine compound (f) having a mean particle size of 40 μ were dispersed in 200 parts of hexane, to which 2.5 parts of tolylene diisocyanate were added while heating at 40 °C with stirring. After 3 hours of this treatment, hexane was removed under reduced pressure and curing agent (f") was obtained. The softening temperature of curing agent (f") was 120 °C, which is 15 °C higher than the softening temperature of amine compound (f).

8 parts of curing agent (f") were dispersed in 100 parts of AER X-2501. The curability and storage stability of the resulting compositions are shown below.

Curability (gelling time):
      at 120 °C                         5 minutes

Storage stability:
      at  25 °C                      12 months

Example 9

In 100 parts of AER X-2503 (trademark; produced by Asahi Kasei Kogyo K. K.; a bisphenol A type epoxy resin: epoxy equivalent: 191; hydrolyzable chlorine: 40 ppm), 8 parts of curing agent (C') prepared in Example 1 were dispersed.

The curability and storage stability of the resulting composition are shown below.

Curability (gelling time):
    at 120 °C                        2.5 minutes

Storage stability:
    at 25 °C                      12   months

Example 10

Triethylenetetramine was reacted with AER 661 to give amine compound (h), which was then ground into a powder having a mean particle size of 3.5 μ. The softening temperature of amine compound (h) was 85 °C.

In 200 parts of hexane, 100 parts of amine compound (h) were dispersed, to which 3.5 parts of 4,4-diphenylmethane diisocyanate were added at 25 °C with stirring. After stirring for 3 hours, hexane was removed under reduced pressure and curing agent (h') was obtained. The softening temperature of curing agent (f') was 103 °C, which is 18 °C higher than the softening temperature of amine compound (h).

In 100 parts of AER X-2501, 25 parts of curing agent (h') were dispersed. The curability and storage stability of the resulting composition are shown below.

    Curability (gelling time):
        at 120 °C                                  6 minutes


    Storage stability:
        at 25 °C                                   6 months


Comparative Example 1

In 100 parts of AER X-2502, (trademark; produced by Asahi Kasei Kogyo K. K.; a bisphenol A type epoxy resin; epoxy equivalent:  191; hydrolytic chlorine:  4,000 ppm), 8 parts of curing agent (C') were dispersed. The curability of the resulting composition was examined. As shown below, it was found to be extremely poor as compared with that in Example 1.

    Gelling time at 120 °C:                        15 minutes

Comparative Examples 2 & 3

To 100 parts of amine compound (C) having a mean particle size of 4 μ used in Reference Example 1, 0.25 part and 10.0 parts each of tolylenediisocyanate were added to give curing agents (C1) and (C2). The softening tem-

peratures of curing agent (C1) and (C2) were 93 $^{\circ}$C and 145 $^{\circ}$C, respectively, which were respectively 3 $^{\circ}$C and 55 $^{\circ}$C higher than the softening temperature of amine compound (C).

The curability and storage stability of the compositions shown in Table 6 were examined. The results are also shown in Table 6.

Table 6

| Comparative Example | 2 | 3 |
|---|---|---|
| AER X-2501, | 100 | 100 |
| Curing agent (C1) | 8 | |
| Curing agent (C2) | | 8 |
| Gelling time (min.) | 2.5 | 20 |
| Storage stability (month) | 1> | 12 |

Curing agents (C1) and (C2) were observed by a transmission type microscope. It was found that the coating layer had a thickness of 80 Å and 11,000 Å, respectively.

Comparative Example 4

Amine compound (f) having once been dissolved in a solvent was spray-dried and finely ground. The powder obtained had a mean particle size of 3.8 μ and it was confirmed by a microscopic observation to be of almost completely spherical shape. This spray-dried material was treated in the same manner as in Example 4 to obtain curing agent (fl). In 100 parts of AER X-2501, 8 parts of this curing agent (fl) were dispersed. The curability and storage stability of the resulting composition were measured. As shown below, curing agent (fl) had inferior curability as compared with that in Example 4.

Gelling time at 120 °C                    7 minutes
Storage stability at 25 °C                12 months

Comparative Example 5

Amine compound (f) used in Example 4 was ground into powder having a mean particle size of 80 µ. To 100 parts of amine compound (f), 2.5 parts of TDI were added to give curing agent (f2).

In 100 parts of AER X-2501, 8 parts of curing agent (f2) were dispersed. The gelling time of the resulting composition was measured. As shown below, it was extremely inferior as compared with that in Example 4.

Gelling time at 120 °C                    20 minutes

Examples 11 to 14

The components shown in Table 5 were incorporated into 100 parts of AER 331 (trademark; produced by Asahi Kasei Kogyo K. K.; a bisphenol A type epoxy resin; epoxy equivalent: 189). The gelling time and storage stability of the resulting compositions were measured. The results are also shown in Table 5.

Table 5

| Example | 11 | 12 | 13 | 14 |
|---|---|---|---|---|
| Curing agent (f') | 4 | 4 | 4 | 4 |
| Dicyandiamide | 8 | | | |
| Trimellitic anhydride | | 25 | | |
| Adipic hydrazide | | | 10 | |
| Diaminodiphenylsulfone | | | | 20 |
| Gelling time (140 °C/min.) | 8 | 6 | 8 | 12 |
| Storage stability (25 °C/month) | | | | |
| | 6< | 6< | 6< | 6< |

The properties of cured products obtained in Example 11 (curing condition: 140 °C/30 minutes) are shown below.

Shear adhesion strength (Fe-Fe): 200 kg/cm$^2$

Tensile strength: 500 kg/cm$^2$

Comparative Example 6

The surface treatment disclosed in Japanese Unexamined Patent Publication No. 83023/1983 was repeated on amine compound (f) having a mean particle size of 4 μ used in Example 4. Using methyl iodide as a surface treatment agent, 5 parts of methyl iodide were added to 100 parts of amine compound (f) having a mean particle size of 4 μ to obtain curing agent (f3).

In 100 parts of AER X-2501, 8 parts of curing agent (f3) were dispersed. The storage stability of the resulting composition was measured. It was found that the composition cured within 1 month of storage at 25 °C, which is most undesirable.

CLAIMS

1.    A one-liquid type epoxy resin composition which comprises:

(1) an epoxy resin (A) containing at least an average of two epoxy groups per molecular unit; and

(2) a curing agent (B) consisting essentially of a powdery amine compound (C) having a softening point of 50 to 150 °C, the particles of said powdery amine compound being coated with at least one of the following layers:

(i) a layer formed by adhesion to the surface of said particles of at least one compound selected from the group consisting of an isocyanate (D), a carboxylic acid (E), a carboxylic acid anhydride (F), an acid halogenated compound (G) and an epoxy compound (H); and

(ii) a layer formed by covalent bonding of the powdery amine compound (C) with at least one compound selected from the group consisting of an isocyanate (D), a carboxylic acid (E), a carboxylic acid anhydride (F), an acid halogenated compound (G) and an epoxy compound (H);
the softening temperature of said curing agent (B) being 5 to 50°C higher than the softening temperature of said powdery amine compound (C).

2.    A one-liquid type epoxy resin composition which comprises:

(1) an epoxy resin (A) containing at least an average of two epoxy groups per molecular unit;

(2) a curing agent (B) consisting essentially of a powdery amine compound (C), the particles of said powdery amine compound being coated with at least one of the following layers:

(i) a layer formed by adhesion to the surface of said particles of at least one compound selected from the group consisting of an isocyanate (D), a carboxylic acid (E), a carboxylic acid anhydride (F), an acid halogenated compound (G) and an epoxy compound (H); and

(ii) a layer formed by covalent bonding of the powdery amine compound (C) with at least one compound selected from the group consisting of an isocyanate (D), a carboxylic acid (E), a carboxylic acid anhydride (F), an acid halogenated compound (G) and an epoxy compound (H); the softening temperature of said curing agent (B) being in the range of 50 to 150 °C, said softening temperature being 5 to 50 °C higher than the softening temperature of said powdery amine compound (C); and

(3) at least one compound selected from the group consisting of a guanidine (O), an aromatic amine (P), a carboxylic acid anhydride (Q) and a hydrazide (R).

3. The one-liquid type epoxy resin composition according to Claim 1 or 2, wherein said epoxy compound (A) is a condensate of bisphenol A with epichlorohydrin.

4. The one-liquid type epoxy resin composition according to any of the Claims 1 to 3, wherein the content of hydrolyzable chlorine in said epoxy resin (A) does not exceed 300 ppm.

5. The one-liquid type epoxy resin composition according to Claim 4, wherein the content of hydrolyzable chlorine in said epoxy resin (A) does not exceed 50 ppm.

6. The one-liquid type epoxy resin composition according to any of the Claims 1 to 5, wherein said powdery amine compound (C) is a compound (I) having at least two amino group active hydrogens per molecule or having at least one tertiary amino group per molecule.

7. The one-liquid type epoxy resin composition according to any of the Claims 1 to 5, wherein said powdery amine compound (C) is an imidazole derivative (J) having at least one hydroxy group per molecule.

8. The one-liquid type epoxy resin composition according to Claim 7, wherein the imidazole compound (J) having at least one hydroxyl group per molecule is an adduct (N) of a compound (K) having at least one epoxy group per molecule with an imidazole compound (L) or a carboxylate (M) of an imidazole compound.

9. The one-liquid type epoxy resin composition according to Claim 8, wherein the imidazole derivative (J) having at least one hydroxyl group per molecule has a softening temperature of 60 to 120 °C.

10. The one-liquid type epoxy resin composition according to Claim 8, wherein the compound (K) having at least one epoxy group is a condensate of bisphenol A with epichlorohydrin.

11. The one-liquid type epoxy resin composition according to Claim 8, wherein the imidazole compound (L) is a compound or a mixture of compounds selected from the group consisting of 2-methylimidazole and 2-ethyl-4-methylimidazole.

12. The one-liquid type epoxy resin composition according to any of the Claims 1 to 11, wherein the powdery amine compound (C) has a mean particle size not exceeding 50 μm.

13. The one-liquid type epoxy resin composition according to Claim 12, wherein the powdery amine compound (C) has a mean particle size not exceeding 5 μ.

14. The one-liquid type epoxy resin composition according to any of the Claims 1 to 13, wherein the particles of the powdery amine compound (C) are non-spherical.

15. The one-liquid type epoxy resin composition according to any of the Claims 1 to 14, wherein the isocyanate compound (D) is a compound or a mixture of compounds selected from the group consisting of toluylene diisocyanate and 4,4-diphenylmethane diisocyanate.

16. The one-liquid type epoxy resin composition according to Claim 15, wherein the curing agent (B) has a softening temperature of 10 to 40 °C higher than the softening temperature of the powdery amine compound (C).

17. The one-liquid type epoxy resin composition according to any of the Claims 1 to 16, wherein the average thickness of the coating layer on the particles of amine compound (C) is 100 to 10,000 Å.

18. The one-liquid type epoxy resin composition according to any of the Claims 1 to 16, wherein the average thickness of the coating layer on the particles of amine compound (C) is 200 to 1,000 Å.

19. The one-liquid type epoxy resin composition according to any of the Claims 1 to 18, wherein the softening temperature of said curing agent (B) is in the range of 50 to 150°C.

20. The use of the one-liquid type epoxy resin composition according to any of the Claims 1 to 19 as a coating material or as an adhesive.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| D,X | PATENTS ABSTRACTS OF JAPAN, vol. 7, no. 175 (C-179) [1320], 3rd August 1983; & JP - A - 58 83 023 (TAOKA KAGAKU KOGYO K.K.) 18-05-1983 * Abstract * | 1-10 | C 08 G 59/18 <br> C 08 G 59/50 <br> C 08 G 59/56 <br> C 08 J 5/24 // <br> C 08 L 63/00 |
| | --- | | |
| X | CHEMICAL ABSTRACTS, vol. 85, 20th September 1976, page 54, no. 79086u, Columbus, Ohio, US; & SU - A - 514 879 (STATE SCIENTIFIC-RESEARCH AND DESIGN INSTITUTE OF POLYMERIC ADHESIVES) 25-05-1976 * Abstract * | 1-20 | |
| | --- | | |
| A | FR-A-1 239 292 (LO) * Abstract * | 1 | **TECHNICAL FIELDS SEARCHED (Int. Cl.4)** <br><br> C 08 G <br> C 08 J |
| | ----- | | |

The present search report has been drawn up for all claims

| Place of search | Date of completion of the search | Examiner |
|---|---|---|
| THE HAGUE | 06-06-1986 | DERAEDT G. |